# EUROPÄISCHE PATENTANMELDUNG

(11) **EP 0 916 979 A1**
(43) Veröffentlichungstag der Anmeldung: **19.05.1999**
(21) Anmeldenummer: 98120176.7
(22) Anmeldetag: 29.10.1998
(51) Int. Cl.: G02B 6/44

(54) **Glasfaser-Abschlussmodul und Einrichtung der Daten- und Telekommunikationstechnik**

(30) Priorität: 17.11.1997 DE 19750932
(71) Anmelder: QUANTE AG, 42109 Wuppertal (DE)
(72) Erfinder: Schmitz, Jürgen, 42283 Wuppertal (DE); Bohle, Klaus, 46238 Bottrop (DE)
(74) Vertreter: HOFFMANN - EITLE

(57) **Zusammenfassung**

Ein Glasfaser-Abschlußmodul weist mehrere Kassetten (24, 26, 32) und eine Frontplatte (12) auf und zeichnet sich dadurch aus, daß an die Frontplatte (12) ein flächiger Kassettenträger (18) angebracht ist, an dem zumindest eine Kassette (24, 26) unmittelbar befestigt ist, und mit dem das Modul (10) in zwei gegenüberliegende Führungsschienen einführbar ist, die an einem Gestell oder einem Träger angeordnet sind und einen gängigen Abstand voneinander aufweisen, und eine Überlängenkassette (32) vorgesehen ist, die bezüglich anderer Kassetten (24, 26) in Richtung der Frontplatte (12) versetzt ist, die ferner höher ist als der Kassettenträger (18) und eine Einrichtung (34) zur Begrenzung des Faserbiegeradius und einen begrenzten, um die Einrichtung (34) zur Begrenzung des Faserbiegeradius angeordneten Ausbreitungsraum aufweist.

Ferner wird eine Einrichtung der Telekommunikations- oder Datentechnik vorgestellt, die zumindest ein derartiges Modul (10) aufweist.

## Beschreibung

### Technisches Gebiet

Die Erfindung betrifft ein Glasfaser-Abschlußmodul gemäß dem Oberbegriff des Abspruchs 1 sowie eine Einrichtung der Daten- und Telekommunikationstechnik mit einem derartigen Modul.

In der Daten- und Telekommunikationstechnik geht der Trend in jüngster Zeit für eine Vielzahl von Anwendungsfällen dahin, anstelle der konventionellen Übertragungstechnik mit Hilfe von Kupferdrähten nunmehr Lichtwellenleiter zu verwenden, durch welche die digitalisierten Informationen in Form von optischen Signalen übertragen werden.

In ähnlicher Weise wie bei der herkömmlichen Technik sind hierbei verschiedenste Verbindungs- und Verteilereinrichtungen erforderlich. Insbesondere müssen beispielsweise diejenigen Lichtwellenleiter, die zu einzelnen Teilnehmern führen, mit der Systemtechnik eines Netzbetreibers verbunden werden. Dies geschieht - ebenfalls in grundsätzlicher Übereinstimmung mit der herkömmlichen Technik - in Verteilereinrichtungen.

### Stand der Technik

Aus der DE 42 07 531 ist ein solcher optischer Verteiler bekannt. Hierbei sind in einen Schwenkrahmen mehrere Baugruppenträger eingeschoben, an die wiederum mehrere Endverschlußkassetten angebracht sind. Die Kassetten stellen jeweils die Endverschlüsse für mehrere Lichtwellenleiter in Form von Glasfasern dar. Der Weg einer einzelnen Glasfaser bis zu diesem Endverschluß gestaltet sich wie folgt. Eine einzelne sogenannte Bündelader, die zusammen mit einigen anderen Bündeladern in einem Glasfaserkabel aufgenommen ist und beispielsweise 12 Einzelfasern aufweist, wird an die Rückseite des Baugruppenträgers des Verteilers geführt.

Bei der in der genannten Patentanmeldung beschriebenen Vorrichtung ist unterhalb jedes Baugruppenträgers eine nach hinten ausziehbare Überlängenschublade angeordnet, deren Funktion nachfolgend noch genauer beschrieben wird. An dieser Stelle sei angemerkt, daß in dieser Überlängenschublade eine gewisse Überlängenreserve der Bündelader in aufgewickelter Form abgelegt wird. Von dort wird die Bündelader in eine Kassette der beschriebenen Kassettenanordnung geführt und in ihre Einzelfasern aufgeteilt. In einer sogenannten Spleißkassette finden sich die Spleißverbindungen zwischen den einzelnen Glasfasern der Bündelader und den sogenannten "Pigtails", bei denen es sich um Glasfasern handelt, die zu den an der Frontplatte der Kassettenanordnung angeordneten Steckern führen.

An dieser Stelle sei kurz die Funktion der Stecker an der Frontseite der Kassettenanordnung erläutert. Bei der beschriebenen Verteileinrichtung liegt typischerweise eine Linienseite vor, an der, wie vorangehend beschrieben, einzelne, zu den jeweiligen Teilnehmern führende Lichtwellenleiter in Form der Stecker abgeschlossen sind. In einem anderen Bereich der Verteilereinrichtung ist die sogenannte Systemseite ausgebildet, an der diejenigen Lichtwellenleiter in ähnlicher Weise abgeschlossen sind, die zu der Systemtechnik des Netzbetreibers führen. Zwischen den jeweiligen Abschlüssen werden durch gesonderte Kabel die Verbindungen in Form von Rangierungen hergestellt.

Hinsichtlich der aus der genannten Schrift bekannten Kassettenanordnung ist noch wesentlich, daß diese üblicherweise zwei einzelne Kassetten aufweist. In einer der beiden Kassetten sind üblicherweise die von den Steckern herkommenden Fasern aufgenommen und derart geführt, daß der Mindestbiegeradius nicht unterschritten wird. Von dieser Kassette sind die Fasern in die andere Kassette übergeführt, die üblicherweise als Spleißkassette bezeichnet wird, und in der sich, wie erwähnt, die jeweiligen Spleißverbindungen finden. Diese Verbindungen sind mittels einer geeigneten, zumeist thermischen Koppelung der Stirnseiten der beiden beteiligten Glasfasern ausgeführt. Ferner sind in dieser Kassette üblicherweise für die einzelnen Glasfasern der Bündelader sogenannte Arbeits- oder Spleißreserven aufgenommen und unter Einhaltung der Mindestbiegeradien in geeigneter Weise geführt. Diese Reserven, die für die Pigtails in der eingangs beschriebenen Kassette vorhanden sind, sind notwendig, wenn eine Spleißverbindung erneuert werden soll. Hierbei wird die vorhandene Verbindung getrennt, und neu geschaffene, gegebenenfalls verbesserte Stirnflächen werden aneinander gekoppelt. Im übrigen ist ein derartiges Abschlußmodul in der EP 0 474 091 A1 beschrieben. Eine ähnliche Anordnung geht aus der EP 0 288 808 A3 hervor.

Ein Anschlußmodul gemäß dem Oberbegriff des Anspruchs 1 ist aus der DE 297 05 039 U1 bekannt. Dieses weist eine Frontplatte und eine metallische Trägerplatte auf, auf deren einer Seite eine Spleißkassette angebracht ist. Auf der anderen Seite ist ein sogenanntes Überlängenfach vorgesehen, das als integrales Teil der Trägerplatte ausgebildet ist.

Die erwähnte Erneuerung einzelner Spleißverbindungen gestaltet sich bei Verwendung dieser bekannten Module in dem aus der DE 42 07 531 bekannten Verteiler äußerst kompliziert. In der zuletzt genannten Druckschrift wird hierfür einerseits ein einhängbarer Spleißtisch vorgeschlagen, der jedoch angesichts der Bauhöhe, die ein derartiger Verteiler aufweisen kann, kein sicheres Arbeiten unter zufriedenstellenden Rahmenbedingungen gestattet. Deshalb ist es alternativ denkbar, die bei dem beschriebenen Verteiler vorhandenen Schwenkrahmen auszuschwenken, so daß die Rückseite der mehreren, in einem einzelnen Baugruppenträger aufgenommenen Module zugänglich ist. In diesem Zustand kann die Überlänge der Bündelader herausgenommen werden, die in der Überlängenschublade abgelegt ist, die unterhalb des jeweiligen Baugruppenträgers ausgebildet ist. Sobald diese aus der Überlängenschublade entnommen wurde, kann das Modul von dem Baugruppenträger gelöst werden, und nach vorne bei ständig zu kontrollierender Nachführung der Überlänge herausgenommen und zu einem entfernten Spleißtisch überführt werden. Dort sind die erforderlichen Arbeiten dann durchführbar.

Eine derartige Anordnung ist insbesondere für die Durchführung der beschriebenen Arbeiten nachteilig, weil gewissermaßen gleichzeitig vorne und hinten an dem ausgeschwenkten Rahmen gearbeitet werden muß. Das Modul ist nach vorne herauszuziehen, während an der Rückseite die Nachführung der Überlänge überwacht werden muß. Insbesondere ist hier nur schwierig zu gewährleisten, daß die erforderlichen Mindestbiegeradien der Bündelader nicht unterschritten werden, was die Bündelader zerstören würde. Darüber hinaus ist dieser bekannte Verteiler durch die Notwendigkeit von Schwenkrahmen in wirtschaftlicher Hinsicht nachteilig.

Dies gilt in gleicher Weise für den aus der CH 687 106 A5 bekannten Verteiler, der grundsätzlich einen Festrahmen aufweisen kann, jedoch ebenfalls Überlängenschubladen erfordert, die in dem Gestell angeordnet sind. Diese Überlängenschubladen führen nicht nur zu einem erheblichen Raumverlust im Hinblick auf die Nutzbarkeit des Verteilergestells, sondern erfordern auch die beschriebene, vergleichsweise komplizierte Handhabung der darin abgelegten Überlänge bei der Entnahme eines einzelnen Abschlußmoduls, wenn an einer entfernten Stelle beispielsweise Spleißarbeiten durchgeführt werden müssen.

Schließlich ist in der CH 688 112 A5 eine Kassettenanordnung beschrieben, die neben der sogenannten Spleiß- und der Kopplerkassette eine Überlängenkassette aufweisen kann. Hierin sind jedoch keine Maßnahmen angegeben, wie ein zugehöriger Verteiler verbessert werden kann, und darüber hinaus ist diese bekannte Kassettenanordnung im Hinblick auf die Verwendung mit Baugruppenträgern mit gängigen, standardisierten Abmessungen und der Einhaltung der Mindestbiegeradien verbesserungsbedürftig.

### Darstellung der Erfindung

Angesichts dieser Nachteile der im Stand der Technik bekannten Glasfaser-Abschlußmodule und der zugehörigen Einrichtungen der Daten- und Telekommunikationstechnik liegt der Erfindung die Aufgabe zugrunde, derartige Anordnungen zu schaffen, die einfach aufgebaut sind und eine einfache Handhabung der daran angeschlossenen Lichtwellenleiter und Bündeladern bei gleichzeitiger Kompatibilität mit gängigen Gestelleinrichtungen und stets gewährleisteter Einhaltung der Mindestbiegeradien ermöglichen.

Die Lösung dieser Aufgabe wird gemäß einem ersten Aspekt der Erfindung durch ein Glasfaser-Abschlußmodul mit den Merkmalen des Anspruchs 1 erreicht.

Demzufolge ist an eine Frontplatte des Moduls ein flächiger Kassettenträger angebracht, an dem zumindest eine Kassette unmittelbar befestigt ist, und mit dem das Modul in zwei gegenüberliegende Führungsschienen eines Gestells oder Baugruppenträgers einführbar ist. In herkömmlicher Weise weist das erfindungsgemäße Modul folglich eine Frontplatte auf, in deren Bereich die Abschlußstecker angeordnet sind, und an der die erforderlichen Beschriftungen ausgeführt sind. Gewöhnlich handelt es sich bei der Frontplatte um ein rechteckiges Verkleidungsbauteil, das im Endzustand zumeist hochkant mit einer Oberfläche nach vorne gerichtet angeordnet ist. Von dieser Frontplatte erstreckt sich der flächige Kassettenträger derart nach hinten, daß seine jeweiligen Flächen zu den Seiten gerichtet sind.

Erfindungsgemäß ist an diesem Kassettenträger zumindest eine Kassette unmittelbar befestigt. D.h., daß die als flaches Gehäuse gestaltete Kassette weitgehend flächig mit dem Träger verbunden ist und folglich zu einer stabilen Ausbildung des Moduls führt. Erfindungsgemäß ist der Kassettenträger ferner derart ausgebildet, daß er in zwei gegenüberliegende Führungsschienen eines Gestells oder eines Trägers einführbar ist, die einen gängigen Abstand voneinander aufweisen. In einem Baugruppenträger sind derartige Führungsschienen im endgültigen Montagezustand üblicherweise unten und oben angebracht, so daß das Modul mittels des flächigen Kassettenträgers in diese Führungsschienen in hochkantiger Ausrichtung eingeführt werden kann. Insbesondere stehen im Endzustand die obere und die untere Kante des Kassettenträgers mit den jeweiligen Führungsschienen in Eingriff. Hierdurch wird erreicht, daß das erfindungsgemäße Modul mit gängigen Baugruppenträgern kompatibel ist, die beispielsweise in der sogenannten 19-Zoll- oder metrischen Technik ausgeführt sind.

Insbesondere weist der Kassettenträger vorzugsweise eine auf internationalen Standards beruhende Höhe (bezüglich des endgültigen Montagezustandes) von 100 mm auf. Die an den Kassettenträger angebrachten Kassetten sind von dieser Höhe unabhängig zu gestalten und können folglich an die Erfordernisse hinsichtlich der aufgenommenen Lichtwellenleiter angepaßt gestaltet werden, ohne daß auf die erforderliche Führung in dem Baugruppenträger Rücksicht genommen werden muß. Insbesondere können die Kassetten deshalb ein wenig niedriger als der Kassettenträger ausgebildet werden. Schließlich können die an den Kassettenträger angebrachten Kassetten von der Frontplatte ein wenig zurückversetzt werden, so daß deren Form und Herstellbarkeit weiter vereinfacht werden kann.

Das erfindungsgemäße Modul zeichnet sich ferner dadurch aus, daß eine sogenannte Überlängenkassette vorgesehen ist, die der Aufnahme einer Überlänge der Bündelader dient. Durch diese Überlängenkassette werden die im Stand der Technik zumeist vorgesehenen, getrennten Überlängenschubladen überflüssig. Erfindungsgemäß trägt jedes Modul seine eigene Bündelader-Überlänge, so daß die Nutzbarkeit eines Verteilergestells, das mit den erfindungsgemäßen Modulen ausgerüstet ist, erheblich gesteigert wird, da der bislang erforderliche Raum für die Überlängenschubladen eingespart wird. Außerdem wird die komplette Adernführung übersichtlich und erheblich leichter zu handhaben. Zusätzlich erhält man einen erhöhten Schutz für die Bündeladern, da diese bei der Montage nicht mit benachbarten Adern in Berührung gebracht werden, wie das bei der bisher üblichen Überlängenschublade der Fall ist.

Die Überlängenkassette ist ferner bezüglich der anderen Kassetten in Richtung der Frontplatte versetzt. Hierdurch wird trotz der Einbautiefe der Überlängenkassette, die zumeist größer ist als die Einbautiefe der übrigen Kassetten, die Gesamteinbautiefe des Moduls gering gehalten und dessen Kompatibilität mit gängigen Gestellen sichergestellt. Dies ist insbesondere auch dann der Fall, wenn eine in der Überlängenkassette aufgenommene Bündelader in eine der anderen Kassetten überführt wird, was (gemäß dem Endzustand) hinter den einzelnen Kassetten erfolgt. Eine derartige Überführung vergrößert an sich die Einbautiefe. Erfindungsgemäß wird dies jedoch dadurch kompensiert, daß die Überlängenkassette gegenüber den anderen Kassetten nach vorne, also in Richtung der Frontplatte versetzt ist.

Die Überlängenkassette ist darüber hinaus höher als der Kassettenträger. Dies ist in Kombination mit dem erfindungsgemäß verwendeten Kassettenträger deshalb vorteilhaft, weil, wie erwähnt, der Kassettenträger für die Einführung in die Führungsschienen verwendet wird, und die Höhe der Überlängenkassetten somit von der Höhe des Kassettenträgers unabhängig ist. Dies bietet den Vorteil, daß die Überlängenkassette ohne weiteres mit einer Radiusbegrenzungseinrichtung ausgerüstet werden kann, die gemäß den heutzutage üblichen Anforderungen mindestens 90 mm hoch ist. Der Mindestbiegeradius der verwendeten Bündeladern liegt nämlich üblicherweise bei 45 mm. Wenn folglich die Höhe der Überlängenkassette von der Höhe des Kassettenträgers abhängig wäre, die, wie erwähnt, 100 mm betragen muß, so wäre es unmöglich, die Radiusbegrenzungseinrichtung mit der erforderlichen Höhe sowie den zum Aufwickeln der Überlänge erforderlichen Raum um diese Begrenzungseinrichtung herum zu gewährleisten. Erfindungsgemäß ist die Überlängenkassette jedoch unabhängig von dem Kassettenträger zu gestalten und insbesondere höher ausgebildet als dieser, so daß die für die Radiusbegrenzungseinrichtung erforderliche Bauhöhe ermöglicht wird.

Schließlich ist in der Überlängenkassette um die Radiusbegrenzungseinrichtung, also die Einrichtung zur Begrenzung des Faserbiegeradius, herum ein sogenannter Ausbreitungsraum ausgebildet, der seinerseits begrenzt ist. Hierdurch wird erreicht, daß bei Verwendung des Moduls eine entsprechende Einrichtung, beispielsweise ein Verteiler, ausschließlich von vorne bestückbar ist. Die Bündelader wird nämlich durch den aufnehmenden Baugruppenträger hindurch nach vorne herausgeführt und beim Einbau des Moduls auf die Radiusbegrenzungseinrichtung der Überlängenkassette vergleichsweise straff aufgewickelt. Nachfolgend wird das Modul in den Baugruppenträger eingeschoben, wobei sich die Bündelader, die vorangehend an einem Abschnitt der mit dem Modul bestückten Einrichtung abgebunden wurde, in den Ausbreitungsraum ausbreitet. Im Endzustand ist die Überlänge folglich vergleichsweise lose in dem Ausbreitungsraum aufgenommen.

Wenn nunmehr an einem Modul eine Tätigkeit durchgeführt werden soll, für die das Modul an einen entfernten Arbeitstisch überführt werden muß, so werden die Verbindungen des Moduls mit dem Baugruppenträger gelöst, und das Modul wird nach vorne herausgezogen. In Umkehrung der vorangehend beschriebenen Ausbreitung legt sich die Bündelader straff um die Radiusbegrenzungseinrichtung, wobei die Mindestbiegeradien nicht unterschritten werden. In einem Zustand, in dem das Modul bereits aus dem Baugruppenträger herausgeführt ist, und die Überlänge weitgehend straff aufgewickelt wurde, wird diese aus der Überlängenkassette entnommen, so daß die Überführung an den entfernten Arbeitstisch möglich wird. Folglich kann durch die Verwendung des erfindungsgemäßen Moduls in einer Einrichtung der Daten- und Telekommunikationstechnik erreicht werden, daß die entsprechende Einrichtung ausschließlich von vorne bestückbar ist, so daß die erforderlichen Arbeiten erheblich vereinfacht werden.

Ferner ist kein aufwendiger Schwenkrahmen erforderlich. Durch das erfindungsgemäße Modul kann in dem Spannungsfeld, das durch die Notwendigkeit der Kompatibilität mit Gestellen gängiger Abmessung, die erforderliche Einhaltung der Mindestbiegeradien der beteiligten Adern und Fasern sowie der angestrebten Einfachheit der Handhabung gebildet wird, ein Modul geschaffen werden, das den Anforderungen in vorteilhafter Weise genügt.

Vorteilhafte Ausführungsformen des erfindungsgemäßen Abschlußmoduls sind in den weiteren Ansprüchen beschrieben.

Demzufolge wird bevorzugt, daß der Kassettenträger eine größere Einbautiefe als die einzelnen Kassetten aufweist, und daß dessen die Kassetten nach hinten überragender Abschnitt zum Abbinden einer Bündelader verwendbar ist, die zwischen zwei Kassetten überführt wird. Folglich kann beispielsweise für die Überführung der Bündelader von der Überlängenkassette in die Spleißkassette eine zuverlässige Führung und insbesondere die stets gewährleistete Einhaltung des Mindestbiegeradius sichergestellt werden.

Für die Unterbringung der Überlänge der Bündelader in der Überlängenkassette ist es ferner vorteilhaft, wenn an der Radiusbegrenzungseinrichtung und/oder denjenigen Abschnitten, die den Ausbreitungsraum begrenzen, Niederhaltefinger ausgebildet sind. Hierdurch wird insbesondere beim Aufwickeln der Überlänge erreicht, daß diese in der Überlängenkassette bleibt, wodurch die Handhabung des Moduls weiterverbessert wird.

Gemäß einem zweiten Aspekt der Erfindung wird eine Einrichtung der Daten- und Telekommunikationstechnik, insbesondere ein Verteiler und bevorzugt ein Hauptverteiler gemäß dem Anspruch 4 vorgestellt.

Die erfindungsgemäße Einrichtung weist zumindest ein vorangehend beschriebenes Modul auf, so daß die genannten Vorteile auch für die gesamte Einrichtung genutzt werden können. Es wird folglich eine ausschließlich von vorne bestückbare Einrichtung geschaffen, die mit wenig Aufwand hergestellt werden kann und eine einfache Handhabung der Übertragungsmittel gestattet.

Bevorzugte Ausführungsformen der erfindungsgemäßen Einrichtung sind in den weiteren Ansprüchen beschrieben.

Bevorzugt ist der Rahmen der Einrichtung als Fest- und nicht als Schwenkrahmen ausgebildet, was die Komplexität verringert und den Herstellungsaufwand senkt. Darüber hinaus weist die erfindungsgemäße Einrichtung in vorteilhafter Weise keine Überlängenschubladen auf, da diese, wie erwähnt, in den jeweiligen Überlängenkassetten der einzelnen Module untergebracht sind. Hierdurch wird die Raumausnutzung der erfindungsgemäßen Einrichtung erheblich verbessert.

Schließlich bietet es, wie erwähnt, Vorteile und wird deshalb bevorzugt, wenn eine in ein Modul eingeführte Bündelader an einem Gestell, insbesondere einem Baugruppenträger der Einrichtung abgebunden ist, wodurch die Handhabung des einzelnen Moduls im Rahmen des Ausbaus und der Überführung zu einem entfernten Arbeitstisch erheblich erleichtert wird.

### Kurze Beschreibung der Zeichnungen

Nachfolgend wird eine beispielhaft in den Zeichnungen dargestellte Ausführungsform der Erfindung näher erläutert. Es zeigen:
- Fig. 1: eine Draufsicht des erfindungsgemäßen Abschlußmoduls; und
- Fig. 2: eine Seitenansicht der Überlängenkassette des in Fig. 1 gezeigten Abschlußmoduls.

### Ausführliche Beschreibung eines bevorzugten Ausführungsbeispiels der Erfindung

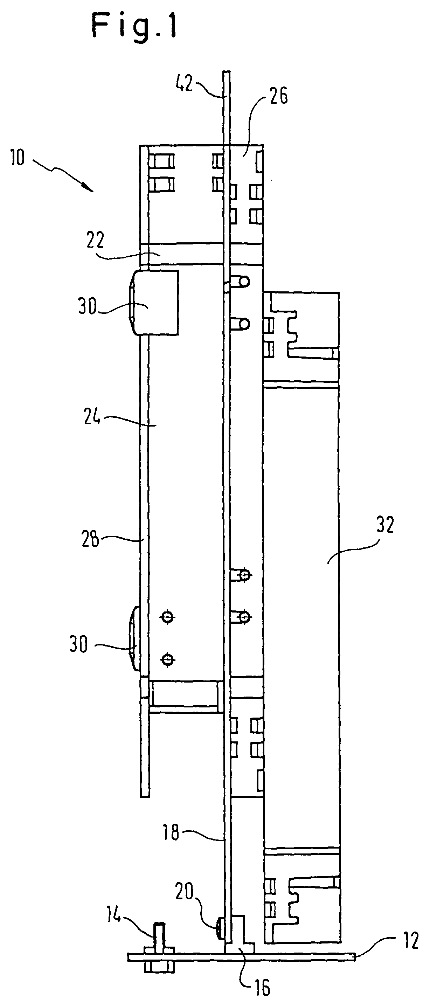

Wie in Fig. 1 gezeigt ist, weist das erfindungsgemäße Glasfaser-Abschlußmodul 10 an seiner (in Fig. 1 unten dargestellten) Vorderseite zum einen eine Frontplatte 12 auf. Mittels dieser Frontplatte 12, an deren Vorderseite im Endzustand die Abschlußstecker der Lichtwellenleiter angeordnet sind (die nicht gezeigt sind), wird das erfindungsgemäße Modul 10 üblicherweise an einen Baugruppenträger befestigt. Dies erfolgt bei dem gezeigten Beispiel durch Befestigungsschrauben 14, die typischerweise am oberen und am unteren Rand der Frontplatte 12 angeordnet sind.

Ein Kassettenträger 18 ist mittels einer Schraube 20 an zumindest ein Zwischenstück 16 angebracht, das mit einer (nicht gezeigten) Schraube an die Frontplatte 12 befestigt ist. Obwohl dies nicht zu erkennen ist, sind bei dem bevorzugten Ausführungsbeispiel der Erfindung im Bereich des oberen und des unteren Randes zwei derartige Verbindungseinrichtungen zwischen dem Kassettenträger 18 und der Frontplatte 12 ausgebildet.

Der Kassettenträger 18 besteht aus einem weitgehend rechteckigen Stück Blech mit einer Blechdicke von etwa 1 mm und einer (senkrecht zur Zeichenebene von Fig. 1 anzutragenden) Höhe von 100 mm, so daß das gesamte Modul 10 durch Einführen des Kassettenträgers in entsprechend in vertikaler Richtung voneinander beabstandete Führungsschienen eines Gestells oder Baugruppenträgers einführbar ist. Im Bereich einer Stufe 22 der beiden an den Kassettenträger 18 angebrachten Kassetten 24 und 26 kann die Höhe des Kassettenträgers 18 entsprechend verringert sein, so daß das "Einfädeln" des Kassettenträgers 18 in die Führungsschienen im Bereich des Übergangs von der verringerten Höhe auf die zwischen dem Bereich der Stufe 22 und der Frontplatte 12 ausgebildete nominelle Höhe von 100 mm erfolgt. Bei anderen Abmessungen der jeweiligen Einrichtung, die mit dem gezeigten Modul 10 zu bestücken ist, ist selbstverständlich eine andere, entsprechend angepaßte Höhe des Kassettenträgers 18 möglich. Es muß lediglich die Einführbarkeit des Kassettenträgers in die Führungen gewährleistet sein, was bei dem gezeigten Ausführungsbeispiel dadurch erreicht wird, daß die Höhe der beiden Kassetten 24, 26 geringer ist als diejenige des Kassettenträgers 18. Insbesondere können die beiden genannten Kassetten unabhängig von dem Kassettenträger und den durch diesen zu erfüllenden Führungsaufgaben gestaltet werden.

Diese Gestaltungsfreiheit äußert sich beispielsweise auch darin, daß die beiden Kassetten 24 und 26 von der Frontplatte 12 ein wenig nach hinten (gemäß der Darstellung von Fig. 1 nach oben) zurückversetzt sind. Hierdurch können ihre Formen und der für ihre Herstellung erforderliche Aufwand vermindert werden. Im einzelnen sind im Endzustand zwischen der Frontplatte 12 und dem vorderen Ende der Kassette 24 die jeweiligen Stecker angeordnet, an welche die Fasern angeschlossen sind. Diese sind in herkömmlicher Weise unter Verwendung eines in der Kassette 24 angeordneten Radiusbegrenzers in dieser aufgewickelt und geführt. Die Kassette 24 ist ferner seitlich durch einen Deckel 28 verschlossen, der in dem gezeigten Fall durch je ein an der Ober- und Unterseite angeordnetes Scharnier 30 angelenkt ist.

Die Enden der sogenannten Pigtails sind von der Kassette 24 in die Spleißkassette 26 übergeführt, in der die Spleißverbindungen untergebracht sind. Die Führung der an der Spleißverbindung beteiligten Abschnitte der Lichtwellenleiter erfolgt ebenfalls unter Einhaltung der Mindestbiegeradien. Ferner ist in der Spleißkassette üblicherweise ein Bereich mit sich parallel zueinander erstreckenden Stegen ausgebildet, zwischen denen jeweils die Spleißverbindungen angeordnet werden.

In die Spleißkassette 26 wird eine Bündelader von der Überlängenkassette 32 übergeführt. Wie in der Figur zu erkennen ist, ist die Überlängenkassette 32 bezüglich der beiden anderen Kassetten 24, 26 in Richtung der Frontplatte 12 nach vorne versetzt. Hierdurch kann trotz der Tatsache, daß im rückwärtigen Bereich der Kassetten üblicherweise die Überführung der Bündelader in die Spleißkassette 26 erfolgt, eine gängige Einbautiefe beibehalten werden. In vorteilhafter Weise wird für die genannte Überführung ferner ein hinterer Abschnitt 42 des Kassettenträgers 18 genutzt, an dem die Bündelader zwischen der Überlängenkassette und der Spleißkassette 26 abgebunden wird. Zu der (gemäß der Darstellung von Fig. 1 senkrecht zur Zeichenebene anzutragenden) Höhe der Überlängenkassette 32 ist festzustellen, daß diese größer ist als die Höhe des Kassettenträgers 18. Durch die Ausbildung der Überlängenkassette 32 unabhängig von dem Kassettenträger 18, der die beschriebenen Führungsaufgaben übernimmt, kann die Überlängenkassette 32 in vorteilhafter Weise so gestaltet werden, daß die Mindestbiegeradien stets eingehalten werden.

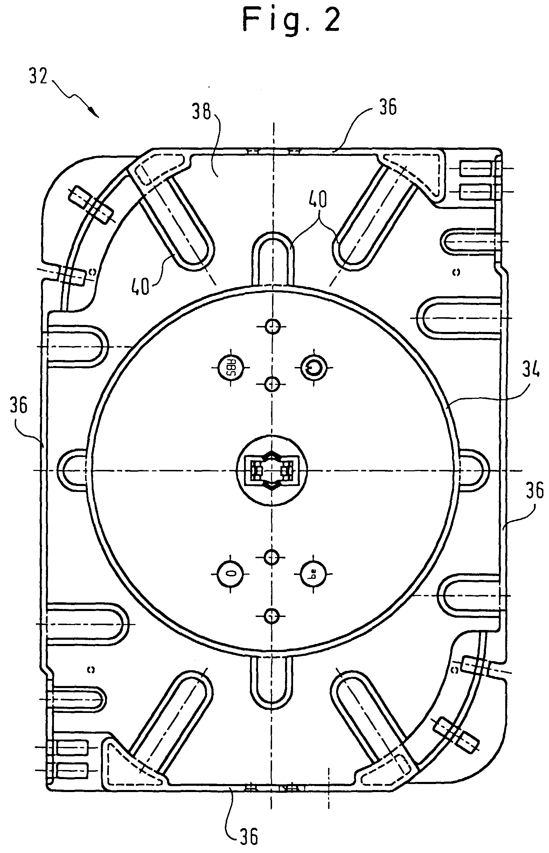

Wie in Fig. 2 zu erkennen ist, die eine rechte Seitenansicht der Überlängenkassette 32 gemäß Fig. 1 darstellt, ist an dieser hierzu eine Radiusbegrenzungseinrichtung 34 vorgesehen. Diese Radiusbegrenzungseinrichtung 34 erstreckt sich als kreisförmiger flacher Ring, mit anderen Worten in Form einer Trommel, von einer Grundplatte der Überlängenkassette 32, die im Anbringzustand der Überlängenkassette 32 (vgl. Fig. 1) an die Spleißkassette 26 anliegend angeordnet ist.

Von dieser Grundplatte erstrecken sich ferner einzelne Wandabschnitte 36, die erfindungsgemäß den sogenannten Ausbreitungsraum 38 begrenzen. Dieser ist dementsprechend zwischen der Radiusbegrenzungseinrichtung 34 und den jeweiligen Wänden 36 ausgebildet und gestattet, daß sich eine Bündelader, die bei der Installation des Moduls vergleichsweise straff auf die Radiusbegrenzungseinrichtung 34 aufgewickelt wurde, beim Einschieben des Moduls 10, an das die Überlängenkassette 32 angebracht ist, in diesen Raum ausbreiten kann. Dies erfolgt insbesondere dann, wenn die Bündelader, die an einer geeigneten Stelle aus der Überlängenkassette 32 herausgeführt ist, an einem Bestandteil des Gestells der Einrichtung, die mit dem Modul 10 bestückt werden soll, abgebunden ist.

Wenn die derart abgebundene Bündelader vergleichsweise straff auf die Radiusbegrenzungseinrichtung 34 aufgewickelt ist, und das Modul 10 in Richtung der Stelle der Abbindung bezüglich des Gestells verschoben, insbesondere mittels des Kassettenträgers 18 in die Führungsschienen eingeschoben wird, so bewegt sich der anfangs zwischen der Abbindungsstelle und der Überlängenkassette 32 angeordnete Abschnitt in die Überlängenkassette 32 hinein und sorgt aufgrund der erhöhten Länge der in der Überlängenkassette 32 aufgenommenen Bündelader-Überlänge für eine Entspannung der Wicklung und ein Ausbreiten in den sogenannten Ausbreitungsraum 38.

Umgekehrt zieht sich die ausgebreitete Überlänge um die Radiusbegrenzungseinrichtung 34 zusammen, wenn das Modul 10 von der Abbindungsstelle entfernt und nach vorne herausgezogen wird. Durch die Ausbildung der Radiusbegrenzungseinrichtung 34 mit einem Radius, der dem Mindestbiegeradius der verwendeten Bündelader entspricht, wird ein Unterschreiten des Mindestbiegeradius jedoch zuverlässig verhindert. Sobald das Modul 10 hinreichend weit herausgezogen wurde, ist die Herausnahme der in der Überlängenkassette 32 aufgenommenen Überlänge und die Überführung des gesamten Moduls 10 zu einem entfernten Arbeits- oder Spleißtisch möglich.

Um zu gewährleisten, daß die Überlänge auch bei der Ausbreitung in den Ausbreitungsraum 38 hinein sicher in der Überlängenkassette 32 verbleibt, sind sowohl an den den Ausbreitungsraum begrenzenden Wänden 38 als auch an der Radiusbegrenzungseinrichtung 34 sogenannte Niederhaltefinger 40 ausgebildet, die ein Austreten der Bündelader verhindern. Durch entsprechende Fädelung ist die gewünschte Herausnahme zur Überführung an einen entfernten Arbeitstisch jedoch ohne weiteres möglich. Obwohl dies aus Fig. 2 nicht ohne weiteres ersichtlich ist, ist klar, daß die Niederhaltefinger 40 im Bereich des (gemäß der Darstellung von Fig. 1) rechten Randes der Überlängenkassette 32, d.h. gemäß der Darstellung von Fig. 2 näher am Betrachter als die vorangehend beschriebene Grundplatte der Überlängenkassette 32 angeordnet sind.

## Patentansprüche

1. Glasfaser-Abschlußmodul mit mehreren Kassetten (24, 26, 32) und einer Frontplatte (12), an die ein flächiger Kassettenträger (18) angebracht ist, an dem zumindest eine Kassette (24, 26) unmittelbar befestigt ist, und mit dem das Modul (10) in zwei gegenüberliegende Führungsschienen einführbar ist, die an einem Gestell oder einem Träger angeordnet sind und einen gängigen Abstand voneinander aufweisen, und einer Überlängenkassette (32),
dadurch **gekennzeichnet,** daß
die Überlängenkassette (32) bezüglich anderer Kassetten (24, 26) in Richtung der Frontplatte (12) versetzt ist, die ferner höher ist als der Kassettenträger (18) und eine Einrichtung (34) zur Begrenzung des Faserbiegeradius und einen begrenzten, um die Einrichtung (34) zur Begrenzung des Faserbiegeradius angeordneten Ausbreitungsraum (38) aufweist.

2. Modul nach Anspruch 1,
dadurch **gekennzeichnet,** daß
der Kassettenträger (18) eine größere Einbautiefe als die Kassetten (24, 26, 32) und einen Abschnitt (42) aufweist, an dem eine zwischen zwei Kassetten (26, 32) überführte Bündelader abbindbar ist.

3. Modul nach Anspruch 1 oder 2,
dadurch **gekennzeichnet,** daß
die Radiusbegrenzungseinrichtung (34) und/oder die den Ausbreitungsraum (38) begrenzenden Wände (36) Niederhaltefinger (40) aufweisen.

4. Einrichtung, insbesondere Verteiler, bevorzugt Hauptverteiler, der Telekommunikations- und Datentechnik mit zumindest einem Modul (10) nach zumindest einem der vorangehenden Ansprüche.

5. Einrichtung nach Anspruch 4,
dadurch **gekennzeichnet,** daß
- das Modul (10), gegebenenfalls über einen Baugruppenträger, an einem festen Rahmen der Einrichtung angebracht ist, und
- keine Überlängenschubladen an der Einrichtung vorhanden sind.

6. Einrichtung nach Anspruch 4 oder 5, dadurch **gekennzeichnet,** daß
eine in das Modul (10) geführte Bündelader an einem Gestell der Einrichtung, gegebenenfalls an einem Baugruppenträger abgebunden ist.
